# EUROPEAN PATENT SPECIFICATION

(11) **EP 2 884 101 B1**
(45) Date of publication and mention of the grant of the patent: **03.05.2017**
(21) Application number: 13197572.4
(22) Date of filing: 16.12.2013
(51) Int. Cl.: F16H 1/28, F03D 15/00

(54) **Planetary gear, wind generator having a planetary gear and use of a planetary gear**
Planetengetriebe, Windgenerator mit einem Planetengetriebe und Verwendung eines Planetengetriebes
Engrenage planétaire, générateur éolien disposant d'un engrenage planétaire et utilisation d'un engrenage planétaire

(43) Date of publication of application: 17.06.2015
(73) Proprietor: Areva Wind GmbH, 27572 Bremerhaven (DE)
(72) Inventor: Pischel, Klaus, 27619 Schiffdorf-Spaden (DE)
(74) Representative: Prinz & Partner mbB

(56) References cited:
- WO-A1-2013/065024
- DE-A1-102010 041 474
- JP-A- 56 052 649
- US-A- 3 307 433
- US-B1- 6 220 984

## Description

### FIELD OF THE INVENTION

The invention relates to planetary gear and to a wind generator, in particular an offshore wind generator, comprising a planetary gear. Furthermore, the invention relates to the use of a planetary gear.

### BACKGROUND

Planetary gears are used in various technical fields, in particular for transmission of high torques. This type of gear offers high gear transmission ratios at a relatively compact size. For example in wind generators, where the required construction space is always an issue, planetary gears are often applied for transmission of the torque from the main shaft carrying the rotor to a driven shaft, which is coupled to the electric generator for production of electricity. High gear transmission ratios are typically provided by multistage planetary gears. For example, a two-staged power split planetary gear for a wind generator is disclosed in document DE 10 2010 041 474 A. The number of gear transmission stages, however, increases a length of the planetary gear. In principle, this contradicts the desired compact size.

To distribute the high torque to a number of individual tooth contacts, a high number of planet gears are typically applied. This, however, increases the size of the planet gear. In addition to this, the construction space around the circumference of the drive gear is limited, thereby limiting the number of applicable planet gears.

US 3 307 433 A discloses a planetary gear for speed reduction having an adjustable gearing. The planetary includes a pair of internal ring gears spaced apart on a common axis and a plurality of planetary members each of which is formed with two relatively turnable portions.

WO 2013/065024 A1 discloses an epicyclic gearing having a plurality of planet gears arranged about a transmission axis so as to form two arrays symmetrical with respect to a plane orthogonal to the transmission axis. The gearing has a body which, on one side, is adapted to be connected to a rotating member and, on the other side, is coupled to a ring. The ring has a plurality of relatively thin plate sectors and a plurality of pins, which extend in cantilever fashion and in opposite directions from the plate sectors and each support a respective planet gear. The coupling between the aforesaid body and the ring defines at least one degree of freedom in rotation about a radial axis to allow a relative movement under load between the two components.

The technical demand for high torque strength and high gear transmission ratios typically renders the planetary gear spacious and heavy. For application in wind generators, in particular in offshore wind generators, size and weight of the planetary gear are, however, crucial. It is therefore desirable to have a compact, light-weight gear even though it offers the capability of bearing high torques while simultaneously having a high gear transmission ratio.

### SUMMARY

It is an object of the invention to provide a planetary gear, a wind generator having a planetary gear and the use of a planetary gear, wherein these should be enhanced with respect to the technical deficiencies, which are known in the prior art.

The object is achieved by the subject matter of claim 1.

Accordingly, a planetary gear for power split transmission is provided. The planetary gear comprises a drive wheel (or driven wheel) engaging a transmission stage having first planet gears, which are coupled to a corresponding number of second planet gears. The first planet gears and the second planet gears are axially displaced with respect to each other. The second planet gears engage a sun wheel, which is coupled to a driven shaft (or drive shaft). The drive wheel is a hollow wheel surrounding an interior space. Furthermore, the drive wheel has an internal gear, which meshes with the first planet gears. The planetary gears described herein can be used as a multiplicator or a reductor. The term drive wheel, therefore, also covers driven wheels and the driven shaft can be a driving shaft.

The second planet gears are divided into a first subset and a second subset of gears. The first subset of gears is arranged in a first plane and the second subset of gears is arranged in a second plane. The first and the second plane are spaced from each other in an axial direction. In other words, the first subset and the second subset of gears are arranged in two separate planes being axially displaced with respect to each other.

In addition to this, the second gears of the first subset are arranged inside an interior space of the hollow drive wheel. In particular, the interior space is limited in a radial direction by an outer shell or sleeve of the hollow drive wheel. In axial direction, the interior space is limited by virtual planes incorporating the axial outer edges of the drive wheel, wherein these virtual or theoretical planes are arranged on opposite sides of the drive wheel. These two planes are substantially perpendicular to the main axis of the planetary gear. The first plane can be arranged on a side of the drive wheel, which faces the drive shaft. The opposite and second plane is arranged on the other side of the drive wheel, which faces the driven shaft. When the planetary gear is mounted in a wind generator, the first plane faces the rotor and the second plane faces the electric generator.

The construction space for arranging the first and the second planet gears around the drive wheel is typically limited. This can be increased, by increasing a diameter of the drive wheel, which is, however, not desirable in all situations. When a compact planetary gear having no particularly large drive wheel should be designed, this can be achieved by arranging the second gears in two axially spaced separate planes, according to aspects of the invention. In other words, the second planet gears can be staggered in an axial direction of the gear. In a front view on the output side of the gear, the second planet gears of the first and the second subset overlap each other. Because the gears are axially displaced, they do, however, not contact each other in real 3D-space.

The planetary gear according to aspects of the invention has a compact design. When compared to conventional gears, the construction space, which is required in radial direction, is reduced. However, the planetary gear is not only compact in radial direction but also in axial direction, because the gears of the first subset are arranged inside the hollow drive wheel. Advantageously, a high number of planetary gears can be arranged around the drive wheel. At the same time, this does not counteract the compact design of the gear.

In addition to this, the transmission stage comprising the first planet gears and the second planet gears can be designed to have a high gear transmission ratio. In particular, the gear transmission ratio of the gear stage can be up to 15. When compared to conventional planetary gears, this high gear transmission ratio allows the number of required gear stages to be reduced. In particular, the planetary gear can be a single stage gear, according to an embodiment of the invention. The design of the planetary gear is economic, its weight and the required construction space is comparably small. The planetary gear according to aspects of the invention offers similar performance characteristics at a reduced size and weight. This renders the gear particularly suitable for wind generators.

In an advantageous embodiment of the invention, the second planet gears and the corresponding gears of the sun wheel are helical gears. A direction of the pitch of the helical second planet gears of the first subset is in particular opposite to a pitch of the helical second planet gears of the second subset. In other words, the inclinations of the helical gears of the first and the second subset are opposite. Similarly, the sun wheel can be configured to have oppositely cut helical gears. These mesh with the corresponding second planet gears of the first and second subset, respectively. Advantageously, this design allows the sun wheel to be freely supported in axial direction. Advantageously, the planetary gear according to this embodiment can dispense with thrust bearings for the sun wheel. At least, the thrust bearings, if considered necessary, can be designed to have lower load bearing capabilities.

According to another advantageous embodiment of the invention, the inclination of the helical second planet gears of the first subset and the inclination of the helical second planet gears of the second subset are at least substantially equal to each other with respect to the their value. In other words, the gears can have an at least substantially equal angle of inclination. This, however only applies to the absolute value of said angles. A sense of rotation of the angles will be opposite so as to provide the oppositely cut helical gears. This design enhances the axial free support of the sun wheel still further.

In an embodiment of the invention, a clutch gearing between the sun wheel and the driven shaft is arranged in a center between the gears, which mesh with the planet gears of the first and the second subset, respectively. This arrangement of the clutch gearing allows the sun wheel to be axially freely supported.

In another advantageous embodiment of the invention, the planetary gear only has a single gear transmission stage. When compared to conventional planetary gears having multiple transmission stages, a gear having a single transmission stage can be lighter, more compact and technically less complicated. Since the second planet gears can have a comparably high radius, thereby providing a high gear transmission ratio, which can be up to 15, a single transmission stage can be sufficient so as to achieve the desired overall gear transmission of the planetary gear.

Furthermore, an outer circumference of the second planet gears partially projects beyond a level of the outer circumference of the drive wheel, in a radial direction. Relatively large second gears are applied within this planetary gear. Consequently, it will offer a high gear transmission ratio.

In another embodiment of the invention, the first and the second plane, which accommodate the gears of the first and the second subset, are arranged on opposite sides of the internal gear of the drive wheel. In particular, the first and second planes can be equally spaced from the internal gear of the drive wheel. In other words, the first and second plane can be arranged symmetrically around the internal gear of the drive wheel. This, in particular, entails that the first and the second gears are coupled to each other using shafts of equal length. In other embodiments, the first and second plane can have a different distance from the internal gear of the drive wheel.

In another aspect of the invention, a wind generator comprising a planetary gear according to aspects of the invention is provided. In particular, this wind generator is an offshore wind generator. Advantageously, the wind generator comprises a compact and light-weight planetary gear, which is, however, capable of transmitting high torques at high gear transmission ratios. The compact design and the reduced weight render the wind generator more economic. For example, due to the reduced size of the planetary gear, less construction space is required inside the nacelle. Hence, this can be designed less spacious. A nacelle having a reduced weight and size in turn relieves the support structure and the foundation from load. This entails that the tower and the underwater foundation of the wind generator can be designed to have lower load-bearing capabilities. This renders the entire wind generator more economic, since there are reduced costs for the foundation, the tower construction and for transport of the wind generator to the construction site.

In an advantageous embodiment of the invention, the planetary gear according to aspects of the invention forms part of a power train of the wind generator. In particular, a main drive shaft, which is coupled to a rotor of the wind generator, is further coupled to the drive wheel of the planetary gear. The driven sun wheel is coupled to a driven shaft, which is further coupled to an electric generator for the production of electricity.

In still another aspect of the invention, an advantageous use of the planetary gear according to aspects of the invention is provided. The planetary gear is used in a wind generator, in particular in an offshore wind generator.

Similar advantages, which have been already mentioned with respect to the planetary gear and with respect to the wind generator, also apply to the use of the planetary gear in a same or similar way.

According to still another illustrative embodiment, a planetary gear for power split transmission is provided. This planetary gear has a drive shaft engaging a first transmission stage having a first number of planet gears, which are coupled to a corresponding number of second planet gears. These are axially displaced with respect to the first planet gears. The second planet gears in turn engage a second transmission stage having a second and lower number of third planet gears. These are coupled to a corresponding number of fourth planet gears being axially displaced with respect to the third planet gears. The fourth planet gears engage a sun wheel, which is in particular coupled to a driven shaft. Two second planet gears engage a single third planet gear, so as to provide the power split transmission. The drive shaft is coupled to a hollow drive wheel having an internal gear, which engages the gears of the first planet gears. This renders the planetary gear according to this aspect of the invention particularly compact.

### BRIEF DESCRIPTION OF DRAWINGS

Further aspects and features of the invention ensue from the following description of preferred embodiments of the invention with reference to the accompanying drawings, wherein
FIG.1 shows a simplified offshore wind generator, according to an embodiment of the invention,
FIG. 2 is a simplified drawing showing a longitudinal-section of a planetary gear along a main axis, according to another embodiment of the invention,
FIG. 3 is a simplified front view in a direction of a main axis of the planetary gear of FIG. 2.
FIG. 4 is a simplified drawing showing a longitudinal-section of another planetary gear along a main axis, according to still another embodiment and
FIG. 5 is a simplified front view in a direction of the main axis of the planetary gear of FIG. 4.

### DETAILED DESCRIPTION OF EXAMPLE EMBODIMENTS

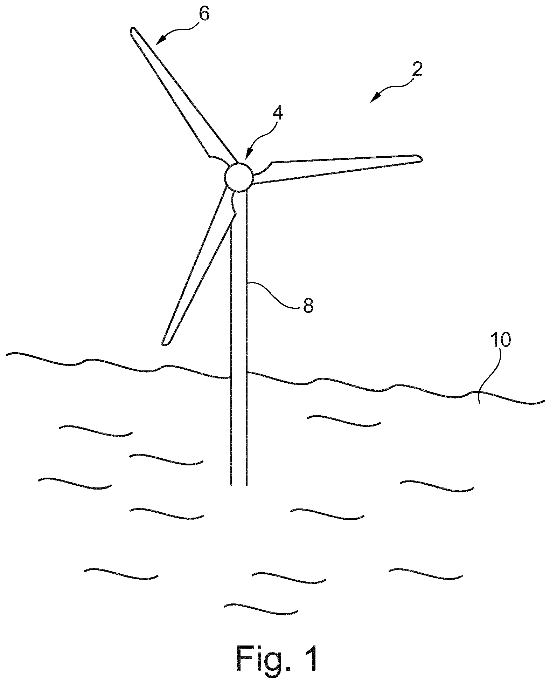

FIG. 1 is a simplified perspective view of a wind generator 2. By way of an example only, the wind generator 2 is an offshore wind generator. It comprises a rotor hub 4 carrying the rotor blades 6. A support structure 8, for example a tower, carries a nacelle (not visible) and is based on a suitable underwater foundation in the sea 10.

According to an embodiment of the invention, a main shaft of the wind generator 2, which is driven by the rotor hub 4, is coupled to a planetary gear, which can be a step-up or a step-down gear. This is to transmit the torque, which is applied on the main shaft, to a driven shaft, which is further coupled to an electric generator for the production of electricity.

The invention generally applies to driving and driven shafts on either side of the planetary gear. The planetary gears described herein can be used as a multiplicator or a reductor. Accordingly, the driven shafts or driven wheels can act as drive shafts or drive wheels and vice versa.

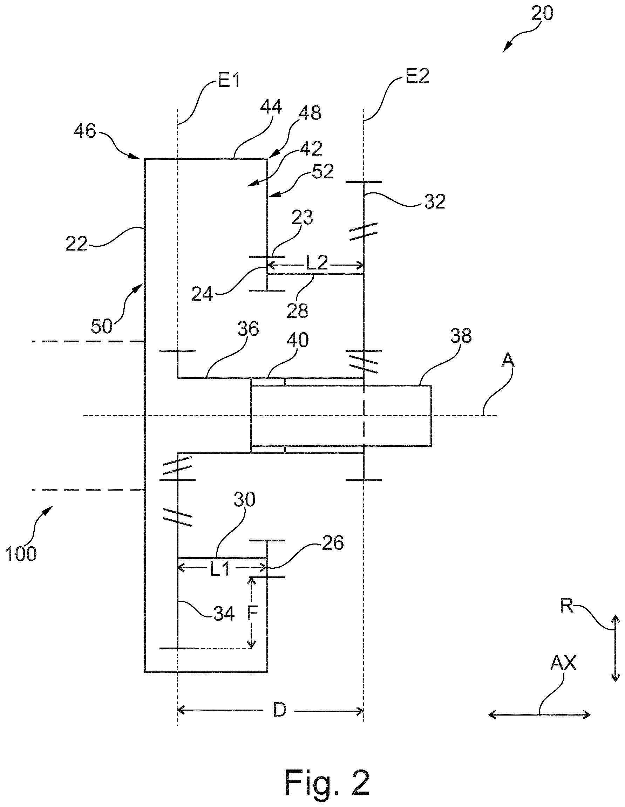

The wind generator 2 can be equipped with a planetary gear 20 according to an embodiment of the invention, which is shown in the simplified drawing of FIG. 2. The planetary gear 20 is depicted in a longitudinal-section along a main axis A. The planetary gear 20 comprises a drive wheel 22, which is a hollow wheel having an internal gear 23. The drive wheel 22 can be coupled to a shaft 100, a portion of which is illustrated by dashed lines. This internal gear 23 can be a straight gear. It meshes with a plurality of first planet gears 24, 26. Hence, the first planet gears 24, 26 can also be straight gears. The first planet gears 24, 26 are coupled via shafts 28, 30 to a corresponding number of second planet gears 32, 34. The first shaft 30 couples the first gear 26 to the second gear 34 of the first subset. It has a first length L1, which is substantially equal to a second length L2 of the second shaft 28. This couples the first planet gear 24 with the second planet gear 32 of the second subset. The second planet gears 32, 34 are axially displaced with respect to the first planet gears 24, 26. In a different embodiment, the first length L1 and the second length L2 can also be different.

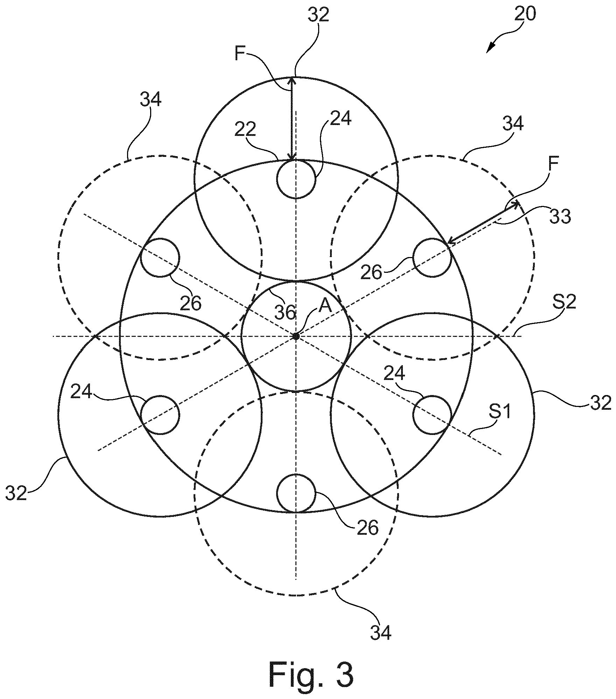

The planetary gear 20 according to the embodiment of FIG. 2, by way of an example only, comprises six first planet gears 24, 26 and six second planet gears 32, 34. This is illustrated in the simplified front view on the driven side of the planetary gear 20, which is shown in FIG. 3. The first and the second planet gears 24, 26 and 32, 34 are equally spaced around the circumference of the drive wheel 22. This is indicated by the symmetry axis S1 to S3, which are drawn in dashed lines.

The second planet gears 32, 34 engage a sun wheel 36, which is further coupled to a driven shaft 38 via a clutch gearing 40 (see FIG. 2). The driven shaft 38 can be further coupled to an electric generator for the production of electricity.

The second planet gears 32, 34 are divided into a first subset of gears and a second subset of gears. The second planet gears having the reference numeral 32 belong to the second subset of gears. The second planet gears, which are provided with the reference number 34, belong to the first subset of gears. The two subsets of gears are arranged in two separate planes E1 and E2, which are spaced in an axial direction AX by a distance D.

The simplified drawing of FIG. 2 shows that the second planet gears 34 of the first subset are arranged in the first plane E1. Similarly, the second planet gears 32 of the second subset are arranged in the second plane E2. In the simplified front view of FIG. 3, the second gears 34 of the first subset are drawn in dashed lines. The second planet gears 32 of the second subset are drawn in solid lines. This illustrates that the second planet gears 32, 34 are staggered along the main axis A of the planetary gear 20. In FIG. 3, the second planet gears 34 of the first subset are arranged behind the second planet gears 32 of the second a subset along an axial direction AX.

The second planet gears 34 of the first subset are further arranged inside the hollow drive wheel 22. In other words, the second planet gears 34 of the first subset, which are located in the first plane E1, are arranged inside an interior space 42 of the drive wheel 22. This interior space 42 is limited in a radial direction R by the outer sleeve or shell 44 of the drive wheel 22. In an axial direction AX, the interior space 42 is limited by virtual planes including the axial edges 46, 48 of the drive wheel 22. Theses planes are merely theoretical planes, which serve to illustrate the limits of the interior space 42.

On the drive side of the planetary gear 20, according to the embodiment of FIG. 2, the interior space 42 is limited in the axial direction AX by the back plane 50 of the drive wheel 22. A theoretical plane, which projects along this back plane 50, includes the outer edge 46 of the drive wheel 22 at this side. On the opposite side of the drive wheel 22, the interior space 42 is limited by a plane, which is arranged to accommodate a front plane 52 of the drive wheel 22. This plane also includes the internal gear 23 of the drive wheel 22 as well as the first planet gears 24, 26. In the embodiment of FIG. 2, this plane is distanced from the first plane E1 by the second distance L2. This second plane includes the axial edge 48 of the drive wheel 22, which faces the driven side of the planetary gear 20. The planes limiting the interior space 42 in axial direction AX are at least substantially parallel to the first and the second plane E1, E2.

Due to the fact, the second planet gears 34 of the first subset are arranged in the first plane E1, which projects in the interior space 42 of the drive wheel 22, the planetary gear 20 is particularly compacted.

The planetary gear 20 can be configured in that the sun wheel 36 is axially freely supported. This axial free support of the sun wheel 36 is due to the helical second planet gears 32, 34 and the corresponding helical gears of the sun wheel 36. An inclination of the helical second planet gears 32 of the second subset is opposite to an inclination of the helical gears 34 of the first subset. Similarly, the gears of the sun wheel 36, which mesh with the second planet gears 32, 34 are also oppositely cut helical gears, i.e. they have opposite directions of inclination.

By way of an example only, the second planet gears 34 of the first subset are left hand gears. The oppositely cut second planet gears 32 of the second subset are right hand gears. The corresponding gears of the sun wheel 36 are oppositely cut, when compared to their counterpart, which meshes therewith. In particular, the gear of the sun wheel 36, which is arranged on the left and which meshes with the second planet gear 34 of the first subset, is a right hand gear. Similarly, the gear of the sun wheel 36 to the right, which meshes with the second planet gear 32 of the second subset, is a left hand gear.

The clutch gearing 40 is arranged in a center between a fist and the second plane E1 and E2. In other words, the clutch gearing 40 is arranged in a center between the planes E1, E2, in which the second planet gears 32, 34 of the first and second subset are arranged.

This allows the sun wheel 36 to be freely supported in axial direction AX. Advantageously, the planetary gear 20 according to this embodiment of the invention can dispense with thrust bearings for the sun wheel 36. At least, the thrust bearings - if considered necessary - can be designed to have a lower load bearing capability.

The planetary gear 20 according to the embodiment in FIGs. 2 and 3 is a single stage gear. The transmission ratio of the single stage can be considerably high, i.e. it can be up to 15. This entails that the second planet gears 32, 34 have a relatively large radius. In particular, the second planet gears 32, 34 project beyond a level of the internal gear 32 of the drive wheel 22 by a distance F. The distance F is considered in radial direction R.

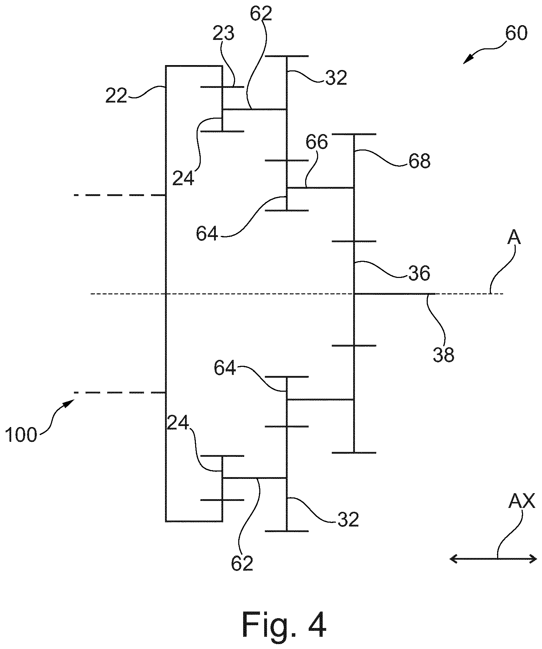

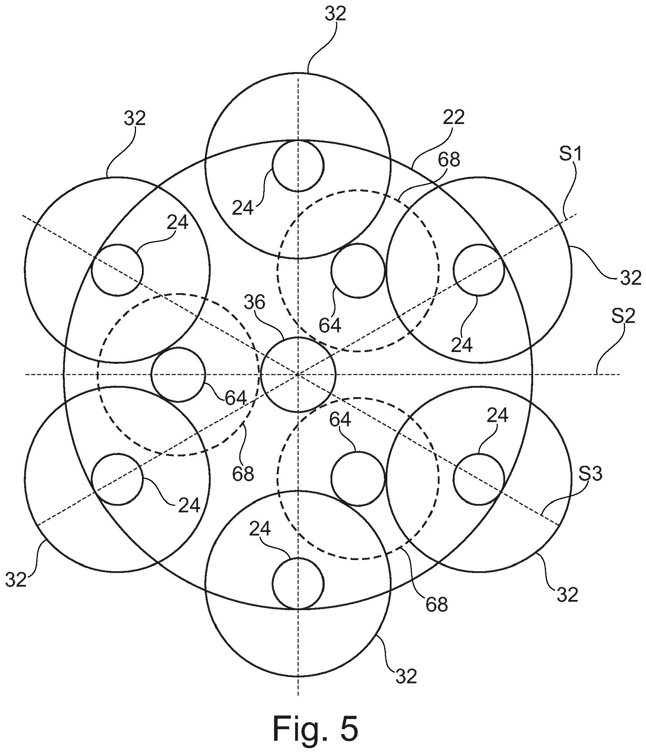

According to another illustrative aspect, there is another embodiment of a planetary gear 60, which is a power split gear and which is shown in the simplified drawing of FIG. 4. FIG. 4 is a longitudinal-section of the planetary gear 60 along a main axis A. The planetary gear 60 includes a drive wheel 22 having an internal gear 23, which engages a first transmission stage. The drive wheel 22 can be coupled to a shaft 100, a portion of which is illustrated by dashed lines. The first transmission stage comprises a number of first planet gears 24, which are arranged around the circumference of the drive wheel 22. According to the embodiment of FIG. 4, the planetary gear 60 comprises six first planet gears 24, which are equally spaced around the circumference of the drive wheel 22. This is illustrated in the simplified front view of FIG.5. The first planet gears 24 are arranged on the equally spaced symmetry axis S1 to S3 and are coupled via first shafts 62 to a corresponding number of second planet gears 32. These are also equally spaced around the circumference of the drive wheel 22. In other words, the first planet gears 24 and the second planet gears 32 are arranged on the symmetry axis S1 to S3, which are equally spaced and which are drawn as dashed lines in FIG. 5.

The second planet gears 32 have an axial distance to the first planet gears 24, wherein all second planet gears 32 are displaced in a same axial direction. In other words, all second planet gears 32 are arranged on the same side of the drive wheel 22. The second planet gears 32 engage third planet gears 64. For power split transmission, two second planet gears 32 engage a single third planet gear 64. This is also clear from the simplified front view of FIG. 5. The third planet gears 64 are coupled via second shafts 66 to forth planet gears 68. The third planet gears 64 and the fourth planet gears 68 are again spaced in axial direction. Similar to the first and second planet gears 24, 32, all forth planet gears 68 are distanced from the third planet gears 64 in a same axial direction.

The forth planet gears 68 engage with the sun wheel 36. This is coupled to a driven shaft 38, which can be further coupled to an electric generator for production of electricity, when the power split planetary gear 60 according to the embodiment of FIGs. 4 and 5 is mounted in a wind generator 2.

Advantageously, the embodiments, which are mentioned with respect to FIGs. 2 and 3, can be combined with the planetary gear 60 according to the embodiments of FIGs. 4 and 5. For example, the first to fourth planet gears 24, 32, 64 and 68 of the planetary gear 60 can be helical gears or straight gears.

The planetary gears 20, 60 according to the embodiments of the invention offer a high power density and a particularly compact size. This renders the planetary gears 20, 60 particularly suitable for integration in the power train of a wind generator 2. For example, the drive wheel 22 can be coupled to a main shaft, which is driven by the rotor hub 4 of the wind generator 2. The driven shaft 38 can be coupled to an electric generator.

## Claims

1. A planetary gear (20), comprising a drive wheel (22) engaging a transmission stage having first planet gears (24, 26), which are coupled to a corresponding number of second planet gears (32, 34) being axially displaced with respect to the first planet gears (24, 26), wherein the second planet gears (32, 34) engage a sun wheel (36), which is coupled to a driven shaft (38), **characterized in that** the drive wheel (22) is a hollow wheel having an internal gear (23) meshing with the first planet gears (24, 26) and the second planet gears (32, 34) are divided into a first subset (34) and a second subset of gears (32), which are arranged in two separate planes (E1, E2) being spaced from each other in an axial direction (AX), wherein the second gears (32) of the first subset are arranged in an interior space (42), which is surrounded by the hollow drive wheel (22) and wherein an outer circumference of the second planet gears (32, 34) partially projects beyond a level of the internal gear (23) of the drive wheel (22), in a radial direction (R).

2. The planetary gear according to claim 1, wherein the gears of the second planet gears (32, 34) and the corresponding gears of the sun wheel (36) are helical gears, and wherein a direction of the pitch of the helical second planet gears of the first subset (34) is opposite to a pitch of the helical second planet gears of the second subset (32).

3. The planetary gear according to claim 2, wherein the sun wheel (36) comprises oppositely cut helical gears, which mesh with the second planet gears of the first subset (34) and the second subset (32), respectively, so as to provide an axially free support of the sun wheel (36).

4. The planetary gear according to claim 2 or 3, wherein inclinations of the helical second planet gears of the first subset (34) and the second subset (32) are at least substantially equal with respect to their value.

5. The planetary gear according to anyone of claims 2 to 4, wherein a clutch gearing (40) between the sun wheel (36) and the driven shaft (38) is arranged in a center between the gears, which mesh with the planet gears of the first and the second subset (32, 34), respectively.

6. The planetary gear according to anyone of the preceding claims, wherein the planetary gear (20) has only one single gear transmission stage.

7. The planetary gear according to anyone of the preceding claims, wherein the first (E1) and the second plane (E2) are arranged on opposite sides of the internal gear of the drive wheel.

8. The planetary gear according to claim 7, wherein the first and the second plane (E1, E2) have a different distance from the internal gear (23) of the drive wheel (22).

9. A wind generator (2), in particular an offshore wind generator, comprising a planetary gear (20) according to anyone of the preceding claims.

10. Use of a planetary gear (20) according to anyone of claims 1 to 8 in a wind generator (2), in particular in an offshore wind generator.

11. A power train for a wind generator comprising a planetary gear according to anyone of claims 1 to 8.

## Patentansprüche

1. Planetengetriebe (20) mit einem Antriebsrad (22), das in eine Getriebestufe eingreift, die erste Planetenräder (24, 26) aufweist, die mit einer entsprechenden Anzahl zweiter Planetenräder (32, 34) gekoppelt sind, die bezüglich der ersten Planetenräder (24, 26) axial verschoben sind, wobei die zweiten Planetenräder (32, 34) in ein Sonnenrad (36) eingreifen, das mit einer Abtriebswelle (38) gekoppelt ist, **dadurch gekennzeichnet, dass** das Antriebsrad (22) ein Hohlrad mit einer Innenverzahnung (23) ist, die mit den ersten Planetenrädern (24, 26) kämmt, und die zweiten Planetenräder (32, 34) in eine erste Teilmenge (34) und eine zweite Teilmenge Räder (32) aufgeteilt sind, die in zwei in einer Axialrichtung (AX) voneinander beabstandeten, getrennten Ebenen (E1, E2) angeordnet sind, wobei die zweiten Räder (32) der ersten Teilmenge in einem Innenraum (42) angeordnet sind, der von dem Antriebshohlrad (22) umgeben ist, und wobei ein Außenumfang der zweiten Planetenräder (32, 34) in einer Radialrichtung (R) teilweise über eine Höhe der Innenverzahnung (23) des Antriebsrades (22) hinausragt.

2. Planetengetriebe nach Anspruch 1, wobei die Verzahnungen der zweiten Planetenräder (32, 34) und die entsprechenden Verzahnungen des Sonnenrades (36) Schrägverzahnungen sind und wobei eine Richtung der Zahnschrägung der schrägverzahnten zweiten Planetenräder der ersten Teilmenge (34) entgegengesetzt zu einer Zahnschrägung der schrägverzahnten zweiten Planetenräder der zweiten Teilmenge (32) ist.

3. Planetengetriebe nach Anspruch 2, wobei das Sonnenrad (36) entgegengesetzte Schrägverzahnungen umfasst, die mit den zweiten Planetenrädern der ersten Teilmenge (34) bzw. der zweiten Teilmenge (32) so kämmen, dass eine axial freie Lagerung des Sonnenrades (36) bereitgestellt ist.

4. Planetengetriebe nach Anspruch 2 oder 3, wobei Neigungen der schrägverzahnten zweiten Planetenräder der ersten Teilmenge (34) und der zweiten Teilmenge (32) bezüglich ihres Wertes zumindest im Wesentlichen gleich sind.

5. Planetengetriebe nach einem der Ansprüche 2 bis 4, wobei ein Kupplungsgetriebe (40) zwischen dem Sonnenrad (36) und der Abtriebswelle (38) in einer Mitte zwischen den Rädern angeordnet ist, die mit den Planetenrädern der ersten bzw. der zweiten Teilmenge (32, 34) kämmen.

6. Planetengetriebe nach einem der vorhergehenden Ansprüche, wobei das Planetengetriebe (20) nur eine einzige Getriebeübersetzungsstufe hat.

7. Planetengetriebe nach einem der vorhergehenden Ansprüche, wobei die erste (E1) und die zweite Ebene (E2) auf entgegengesetzten Seiten der Innenverzahnung des Antriebsrades angeordnet sind.

8. Planetengetriebe nach Anspruch 7, wobei die erste und die zweite Ebene (E1, E2) einen unterschiedlichen Abstand von der Innenverzahnung (23) des Antriebsrades (22) haben.

9. Windkraftanlage (2), insbesondere Offshore-Windkraftanlage, mit einem Planetengetriebe (20) nach einem der vorhergehenden Ansprüche.

10. Verwendung eines Planetengetriebes (20) nach einem der Ansprüche 1 bis 8 bei einer Windkraftanlage (2), insbesondere bei einer Offshore-Windkraftanlage.

11. Antriebsstrang für eine Windkraftanlage mit einem Planetengetriebe nach einem der Ansprüche 1 bis 8.

## Revendications

1. Engrenage planétaire (20) comprenant une roue menante (22) qui s'engage dans un étage de transmission qui présente des premières roues planétaires (24, 26) couplées à un nombre correspondant de deuxièmes roues planétaires (32, 34) lesquelles sont axialement décalées par rapport aux premières roues planétaires (24, 26), les deuxièmes roues planétaires (32, 34) s'engageant dans une roue solaire (36) qui est couplée à un arbre mené (38), **caractérisé en ce que** la roue menante (22) est une roue creuse à denture intérieure (23) qui s'engrène dans les premières roues planétaires (24, 26), et **en ce que** les deuxièmes roues planétaires (32, 34) sont divisées en un premier sous-ensemble de roues (34) et un deuxième sous-ensemble de roues (32) qui sont agencés dans deux plans (E1, E2) séparés espacés l'un de l'autre dans un sens axial (AX), les deuxièmes roues (32) du premier sous-ensemble étant agencées dans un espace intérieur (42) qui est entouré par la roue menante creuse (22), et une périphérie extérieure des deuxièmes roues planétaires (32, 34) faisant partiellement saillie au-delà d'un niveau de la denture intérieure (23) de la roue menante (22) dans un sens radial (R).

2. Engrenage planétaire selon la revendication 1, les dentures des deuxièmes roues planétaires (32, 34) et les dentures correspondantes de la roue solaire (36) étant des dentures hélicoïdales, et un sens de l'inclinaison des dents des deuxièmes roues planétaires hélicoïdales du premier sous-ensemble (34) étant opposé à une inclinaison des dents des deuxièmes roues planétaires hélicoïdales du deuxième sous-ensemble (32).

3. Engrenage planétaire selon la revendication 2, la roue solaire (36) présentant des dentures hélicoïdales taillées de manière opposée qui s'engrènent dans les deuxièmes roues planétaires du premier sous-ensemble (34) et du deuxième sous-ensemble (32), respectivement, de manière à réaliser un support axialement libre de la roue solaire (36).

4. Engrenage planétaire selon la revendication 2 ou 3, des inclinaisons des deuxièmes roues planétaires hélicoïdales du premier sous-ensemble (34) et du deuxième sous-ensemble (32) étant au moins sensiblement identiques en ce qui concerne leur valeur.

5. Engrenage planétaire selon l'une des revendications 2 à 4, un engrenage d'embrayage (40) entre la roue solaire (36) et l'arbre mené (38) étant agencé au milieu entre les roues qui s'engrènent dans les roues planétaires du premier sous-ensemble et du deuxième sous-ensemble (32, 24), respectivement.

6. Engrenage planétaire selon l'une des revendications précédentes, l'engrenage planétaire (20) présentant un seul étage de transmission par engrenage.

7. Engrenage planétaire selon l'une des revendications précédentes, le premier plan (E1) et le deuxième plan (E2) étant agencés sur des faces opposées de la denture intérieure de la roue menante.

8. Engrenage planétaire selon la revendication 7, le premier et le deuxième plan (E1, E2) étant agencés à différentes distances de la denture intérieure (23) de la roue menante (22).

9. Éolienne (2), en particulier éolienne en mer, comprenant un engrenage planétaire (20) selon l'une des revendications précédentes.

10. Utilisation d'un engrenage planétaire (20) selon l'une des revendications 1 à 8 dans une éolienne (2), en particulier une éolienne en mer.

11. Train d'entraînement pour une éolienne comprenant un engrenage planétaire selon l'une des revendications 1 à 8.
